# EUROPÄISCHE PATENTANMELDUNG

(11) **EP 2 918 982 A1**
(43) Veröffentlichungstag der Anmeldung: **16.09.2015**
(21) Anmeldenummer: 14158521.6
(22) Anmeldetag: 10.03.2014
(51) Int. Cl.: G01G 19/12

(54) **Transport von Einsatzstoff einer hüttentechnischen Anlage**

(71) Anmelder: Siemens VAI Metals Technologies GmbH, 4031 Linz (AT)
(72) Erfinder: Rohrhofer, Andreas, 4020 Linz (AT); Lehofer, Martin, 4050 Traun (AT); Fischer, Paul, 4020 Linz (AT); Hartl, Franz, 4720 Kallham (AT); Kuehas, Thomas, 4222 Luftenberg (AT); Weinzinger, Michael, 4020 Linz (AT)
(74) Vertreter: Maier, Daniel Oliver

(57) **Zusammenfassung**

Die Erfindung betrifft eine Transportvorrichtung und ein Transportsystem mit einer derartigen Transportvorrichtung für den Transport von Einsatzstoff (1) einer hüttentechnischen Anlage, wobei die Transportvorrichtung ein Transportgefäß (2), welches zumindest teilweise mit dem Einsatzstoff (1) befüllbar ist, und eine Tragevorrichtung (3) umfasst. Um die erreichbare Produktqualität der hüttentechnischen Anlage zu erhöhen, wird eine Transportvorrichtung der eingangs genannten Art vorgeschlagen, wobei die Transportvorrichtung zumindest einen ersten Sensor (4) umfasst, wobei der zumindest eine erste Sensor (4) zwischen dem Transportgefäß (2) und der Tragevorrichtung (3) angeordnet ist, wobei mittels des zumindest einen erste Sensors (4) eine Masse des Transportgefäßes (2) und/oder eine Masse des im Transportgefäß (2) befindlichen Einsatzstoffes (1) ermittelbar ist.

## Beschreibung

Die Erfindung betrifft eine Transportvorrichtung und ein Transportsystem mit einer derartigen Transportvorrichtung für den Transport von Einsatzstoff einer hüttentechnischen Anlage, wobei die Transportvorrichtung ein Transportgefäß, welches zumindest teilweise mit dem Einsatzstoff befüllbar ist, und eine Tragevorrichtung umfasst.

Derartige Vorrichtungen kommen beispielsweise bei der Herstellung von Stahl in einem Hüttenwerk mit einem Konverter zum Einsatz. Dort wird mittels Schrottbehältern, z.B. Schrottschuren oder Schrottkörben, Schrott vom Schrottplatz zur Chargierhalle in der Nähe des Konverters oder des Lichtbogenofens transportiert. Für die genaue Führung des Prozesses ist es von großer Bedeutung, dass das Schrottgewicht genau bekannt ist.

Je genauer das Schrottgewicht bekannt ist, desto genauer rechnen Rechenmodelle im eigentlichen Stahlerzeugungs-Prozess, wie z. B. BOF ("basic oxigyn furnace" bzw. Linz-Donawitz-Verfahren), AOD ("argon oxygen decarburization" bzw. Argon-Sauerstoff-Entkohlung), EAF ("electric arc furnace" bzw. Elektrolichtbogenofen). Dadurch kann der Entkohlungsvorgang genauer gesteuert werden. Bei ungenauem Gewicht ist die Trefferquote der Entkohlung entsprechend falsch und es muss entweder Sauerstoff nachgeblasen ("Reblow") oder ein weiterer Zuschlagstoff, z.B. Aluminium, zugegeben werden.

Falsch bestimmte Schrottgewichte führen somit zu einer verringerten Produktivität des Stahlwerks, da der geplante Produktionsprozess nicht eingehalten werden kann und die Logistikplanung geändert werden muss. Die Zugabe von Zuschlagsstoffen, insbesondere Aluminium, führt ebenfalls zu erheblichen Mehrkosten.

Für eine Charge im BOF/AOD/EAF-Prozess wird ermittelt, welche Menge an Schrott dafür bereitgestellt werden muss. Stahlwerksbetreiber versuchen dabei, durch die Auswahl des Schrottes die chemische Zielanalyse der Charge möglichst genau zu treffen. Am Schrottplatz wird deshalb oftmals der Schrott nach Stahlsorten sortiert. Die Mitarbeiter am Schrottplatz bekommen pro Charge eine Vorgabe, welche Stahlsorten in welcher Menge in einen Schrottbehälter zu füllen sind.

Die Ermittlung des Gewichtes kann über fest installierte Plattformwaagen erfolgen, was eine sehr genaue Methode ist. Je nach Größe des Schrottplatzes gibt es dabei mehrere fix installierte Plattformen auf denen die Schrottbehälter abgestellt werden und von Kränen, entweder auf Schienen fahrbar oder auf Fahrzeugen, gefüllt werden. Plattformwaagen bringen aber starke logistische Einschränkungen mit sich, da die Kräne weite Wege von der Aufnahmeposition des Schrottes bis zur Waage zurücklegen müssen.

Deswegen wird oft auf die Nutzung bzw. Installation von Plattformwaagen verzichtet. Die Schrottbehälter werden dann frei am Schrottplatz, idealerweise in der Nähe des aufzuladenden Schrotts platziert. Dadurch verringert sich die zum Beladen benötigte Zeit wesentlich. Dies führt zu einer erhöhten Produktivität des Schrottplatzes, also der Anzahl der befüllbaren Schrottbehälter pro Zeitintervall, und führt zu einem verringertem Materialeinsatz, nämlich der Schrottbehälter, und geringeren variablen Kosten durch kürzere zurückgelegte Wege und durch geringere Instandhaltungskosten für Fahrzeuge und Waagen.

Die Wägung des Schrotts erfolgt dann direkt am Kran über Wägezellen in der Krankonstruktion. Der Kranführer bestätigt das von der Wägezelle ermittelte und ihm angezeigte Gewicht als korrekt. Die bestätigten Gewichte werden elektronisch summiert und am Ende des Beladungsvorgangs an das Stahlwerk übertragen, in der Regel an das Prozessoptimierungssystem (Level 2). Um eine genaue Wägung zu gewährleisten, ist es jedoch erforderlich, dass die Last nicht schwingt. Das Auspendeln der Kranlast wird jedoch oft von den Kranführern nicht abgewartet, da sie unter hohem Zeitdruck stehen, weil das Stahlwerk ohne Schrott nicht produzieren kann. Nur wenn sich Kranführer durch schnelleres Beladen der Schrottkörbe einen "Vorsprung" erarbeitet, kann er z.B. eine Pause machen.

Durch das Pendeln der Last während der Gewichtsermittlung ergeben sich große Ungenauigkeiten beim berechneten Gesamtgewicht des Schrottkorbs. Die ermittelten Gewichte weichen oftmals um 10-15% vom tatsächlichen Gewicht ab.

Der Erfindung liegt die Aufgabe zugrunde, die erreichbare Produktqualität der hüttentechnischen Anlage zu erhöhen.

Diese Aufgabe wird durch eine Transportvorrichtung der eingangs genannten Art dadurch gelöst, dass die Transportvorrichtung zumindest einen ersten Sensor umfasst, wobei der zumindest eine erste Sensor zwischen dem Transportgefäß und der Tragevorrichtung angeordnet ist, wobei mittels des zumindest einen erste Sensors eine Masse des Transportgefäßes und/oder eine Masse des im Transportgefäß befindlichen Einsatzstoffes ermittelbar ist.

Insbesondere ist die hüttentechnische Anlage für die Herstellung von Stahl ausgelegt, so dass die hüttentechnische Anlage beispielsweise als Konverter ausgestaltet ist. Als Einsatzstoff wird vorzugsweise Schrott eingesetzt.

Der zumindest eine erste Sensor ist zwischen dem Transportgefäß und der Tragevorrichtung angeordnet, wobei die Masse des Transportgefäßes bzw. des im Transportgefäß befindlichen Einsatzstoffes ermittelbar ist. Somit ist die jeweilige Masse anhand des zumindest einen ersten Sensors sehr genau und zuverlässig ermittelbar. Typischerweise wird die Transportvorrichtung in der hüttentechnischen Anlage dazu verwendet, den Einsatzstoff insbesondere den in einem Konverter ablaufenden Prozessen zuzuführen, wobei auch die genaue Menge des zugeführten Einsatzstoffes über die Qualität des Endproduktes entscheidet. Dank der präzisen und zuverlässigen Ermittlung der jeweiligen Masse kann somit die erreichbare Produktqualität der hüttentechnischen Anlage erhöht werden.

Als jeweiliger erster Sensor kann beispielsweise ein Dehnungsmessstreifen, ein Piezoelement oder ein Druckmessumformer zum Einsatz kommen.

Die Transportvorrichtung kann beispielsweise als auf ein Rahmengestell aufgesetztes Schrottgefäß ausgeführt sein, wobei zwischen dem Gefäß und dem Gestell der zumindest eine erste Sensor angebracht ist. Je nach Konstruktion des Transportgefäßes und der Tragevorrichtung können auch mehrere erste Sensoren vorgesehen sein. Weiterhin kann der jeweilige erste Sensor als Wägezelle ausgestaltet sein. Vorzugsweise ist die Transportvorrichtung auf Schienen, mit einem Kran oder einem sonstigen Manipulator transportierbar.

Bei einer vorteilhaften Ausgestaltung der Erfindung liegt das Transportgefäß auf dem zumindest einen ersten Sensor auf und der zumindest eine erste Sensor liegt auf der Tragevorrichtung auf.

Eine derartige Konstruktion der Transportvorrichtung kann einerseits leicht und kostengünstig hergestellt werden und erlaubt andererseits eine zuverlässige Ermittlung der jeweiligen Masse.

Bei einer weiteren vorteilhaften Ausgestaltung der Erfindung weist wobei die Transportvorrichtung eine Recheneinheit auf, wobei vom zumindest einen ersten Sensor erfasste Daten an die Recheneinheit übermittelbar sind, wobei die Recheneinheit zur Ermittlung der Masse ausgelegt ist.

Die Recheneinheit kann beispielsweise als Prozessor, Mikroprozessor, CPU, Steuerungselektronik oder Controller ausgeführt sein, wobei die Recheneinheit mit dem zumindest einen ersten Sensor zur Übermittlung der entsprechenden Sensordaten drahtlos oder drahtgebunden verbunden ist. Entsprechend können die Sensordaten des zumindest einen Sensors an die Recheneinheit übermittelt werden, mittels welcher die jeweilige Masse auf Grundlage der übermittelten Sensordaten ermittelbar ist.

Vorzugsweise ist die Recheneinheit in einem Elektronikgehäuse untergebracht, welches die Recheneinheit vor Staub, Hitze und/oder Spritzern von flüssigem Metall oder Stahl schützt.

Insbesondere weist das Elektronikgehäuse bzw. die Recheneinheit eine I/O-Komponente auf, mittels welcher die Messwerte des zumindest einen ersten Sensors empfangen und gegebenenfalls vorverarbeitet werden können und schließlich der eigentlichen Recheneinheit zuführbar sind. Aus den übermittelten Messwerten des zumindest einen ersten Sensors ermittelt die Recheneinheit die Gesamtmasse des Transportgefäßes bzw. die Masse des im Transportgefäß befindlichen Einsatzstoffes.

Insbesondere bei einem Transportsystem mit mehreren derartigen Transportvorrichtungen kann durch die Integration der Recheneinheit in die jeweilige Transportvorrichtung die Komplexität des Transportsystems verringert werden, da einzelne Funktionalitäten des Transportsystems lokal bzw. dezentral erledigt werden können. Gleichzeitig lässt sich dadurch die Datenmenge bzw. die Bandbreite einer Verbindung zwischen der jeweiligen Transportvorrichtung und dem restlichen Transportsystem verringern, was hilft, Kosten zu sparen und die Verfügbarkeit des Transportsystems zu steigern.

Bei einer weiteren vorteilhaften Ausgestaltung der Erfindung weist die Transportvorrichtung zumindest einen zweiten Sensor auf, wobei mittels des zumindest einen zweiten Sensors eine Neigung und/oder eine Beschleunigung der Transportvorrichtung ermittelbar ist.

Ist die Transportvorrichtung geneigt bzw. wird die Transportvorrichtung beschleunigt, so wirken auf den zumindest einen ersten Sensor zusätzliche Kräfte zur Gewichtskraft der Masse des Transportgefäßes und/oder der Masse des im Transportgefäß befindlichen Einsatzstoffes. Im Falle einer Neigung der Transportvorrichtung kann insbesondere lediglich die auf den jeweiligen ersten Sensor ausgeübte Normalkraft erfassbar sein. Insbesondere bei mehreren ersten Sensoren kann zusätzlich eine Gewichtsverlagerung auftreten, so dass der jeweilige, tiefer angeordnete erste Sensor einer größeren Kraft ausgeliefert ist. Auch bei einer Beschleunigung der Transportvorrichtung treten zusätzliche Kräfte auf, wobei die Beschleunigung beispielsweise als Erhöhung oder Erniedrigung der Geschwindigkeit und/oder als Änderung der Bewegungsrichtung vorliegen kann.

Der jeweilige zweite Sensor erlaubt somit eine Neigung und/oder eine Beschleunigung der Transportvorrichtung zu erfassen und die damit einhergehenden zusätzlichen Kräfte bei der Ermittlung der jeweiligen Masse zu berücksichtigen. Insbesondere ist der jeweilige zweite Sensor drahtlos oder drahtgebunden mit der oben erläuterten Recheneinheit verbunden, welche insbesondere dazu ausgelegt ist, die jeweilige Masse unter Verwendung der Daten des jeweiligen ersten Sensors und unter Berücksichtigung der Daten des jeweiligen zweiten Sensors zu ermitteln.

Somit kann die Recheneinheit als zusätzliche Eingabe den zumindest einen zweiten Sensor, der beispielsweise als Neigungssensor oder Beschleunigungssensor ausgestaltet ist, heranziehen. Der jeweilige zweite Sensor wird vorzugsweise am Transportgefäß bzw. Schrottgefäß oder der Tragevorrichtung bzw. dem Rahmengestell befestigt. Mithilfe des jeweiligen zweiten Sensors wird insbesondere die Neigung der Transportvorrichtung ermittelt, um eine genauere Berechnung der jeweiligen Masse bzw. des Gewichtes zu ermöglichen. Stellt die Recheneinheit fest, dass die Neigung oder Beschleunigung des Gefäßes keine genaue Bestimmung des Gewichtes ermöglicht, etwa weil eine maximal zulässige Neigung des jeweiligen ersten Sensors bzw. der Wägezellen überschritten wird, kann beispielsweise vorgesehen sein, dass der Benutzer keine Bestätigung vornehmen kann. Es ist auch vorstellbar, dass nach dem Auslösen einer "Beladen fertig"-Aktion ein definierter Zeitraum, wie zum Beispiel 10 Sekunden, abgewartet wird, ob sich eine akzeptable Neigung oder Beschleunigung einstellt und sodann der ermittelte Wert der jeweiligen Masse akzeptiert bzw. übermittelt wird.

Vorzugsweise ist der zumindest eine Sensor derart angeordnet, dass die Gewichtskraft der Masse des Transportgefäßes und/oder der Masse des im Transportgefäßes befindlichen Einsatzstoff direkt erfassbar ist. Dies kann beispielsweise dadurch erreicht werden, dass das Transportgefäß senkrecht auf dem zumindest einen ersten Sensor aufliegt und/oder dass der zumindest eine erste Sensor senkrecht auf der Tragevorrichtung aufliegt.

Bei einer weiteren vorteilhaften Ausgestaltung der Erfindung weist die Transportvorrichtung zumindest einen dritten Sensor auf, wobei mittels des zumindest einen dritten Sensors eine Temperatur ermittelbar ist.

Insbesondere im Stahlwerksumfeld treten oftmals große Temperaturschwankungen auf - am Schrottplatz hat es beispielsweise -20°C und im Stahlwerk +20°C. Dabei weisen viele der Messvorrichtungen, die als jeweiliger erster Sensor eingesetzt werden können, ein temperaturabhängiges Verhalten auf, so dass die Messdaten in nach Umgebungstemperatur teilweise verfälscht sind bzw. der jeweilige erste Sensor lediglich innerhalb eines bestimmten Temperaturintervalle verlässliche Messdaten liefern kann.

Dank des jeweiligen dritten Sensors kann die an der Transportvorrichtung, insbesondere am jeweiligen ersten Sensor, vorliegende Temperatur erfasst werden, wodurch eine Kompensation des von der Temperatur rührenden Messfehlers des jeweiligen ersten und/oder zweiten Sensors ermöglicht wird. Dies ermöglicht eine präzise Ermittlung der jeweiligen Masse, unabhängig davon, in welcher Umgebungstemperatur die Transportvorrichtung betrieben wird. Beispielsweise ist der jeweilige dritte Sensor drahtlos oder drahtgebunden mit der oben erläuterten Recheneinheit verbunden, welche insbesondere dazu ausgelegt ist, die jeweilige Masse unter Verwendung der Daten des jeweiligen ersten Sensors und unter Berücksichtigung der Daten des jeweiligen dritten und gegebenenfalls zweiten Sensors zu ermitteln.

Somit kann die Recheneinheit als zusätzliche Eingabe den zumindest einen dritten Sensor, der beispielsweise jeweils als Temperatursensor ausgestaltet ist, heranziehen, insbesondere wenn ein nicht temperaturkompensierter erster Sensor bzw. eine nicht temperaturkompensierte Wägezelle verwendet wird. Der jeweilige dritte Sensor bzw. Temperatursensor wird vorzugsweise am Transportgefäß bzw. Schrottgefäß oder an der Tragevorrichtung bzw. dem Rahmengestell angeordnet, vorzugsweise in der Nähe des jeweiligen ersten Sensors.

Genauso vorstellbar ist, dass die Temperaturdaten drahtlos von einem zentral am Schrottplatz montiertem Temperatursensor übertragen werden oder per Internet von einem Wettervorhersagedienst abgefragt werden. Die Recheneinheit berücksichtigt die Temperaturdaten bei der Berechnung der jeweiligen Masse bzw. des jeweiligen Gewichtes, da die Daten des jeweiligen ersten Sensors bzw. der Wägezelle abhängig von der Außentemperatur sind. Der jeweilige dritte Sensor bzw. Temperatursensor kann bei geeigneter Platzierung auch dazu verwendet werden, die maximale zulässige Temperatur des jeweiligen ersten Sensors bzw. der Wägezelle zu überwachen. Wird von der Recheneinheit eine Überschreitung der maximal zulässigen Temperatur festgestellt, kann dies einem verbundenen Condition-Monitoring-System bzw. einem Instandhaltungs-Management-System gemeldet werden. Insbesondere ist Condition-Monitoring- System bzw. einem Instandhaltungs-Management-System als Teil des weiter unten erläuterten Transportsystems ausgestaltet.

Bei einer weiteren vorteilhaften Ausgestaltung der Erfindung weist die Transportvorrichtung zumindest einen Energiewandler auf, mittels welchem jeweils elektrische Energie erzeugbar ist.

Insbesondere ist der jeweilige Energiewandler dazu ausgelegt, elektrische Energie aus Vibrationen, Temperaturunterschieden und/oder der Beschleunigung der Transportvorrichtung zu gewinnen. So können beispielsweise beim Beschleunigen oder beim Abbremsen der Transportvorrichtung auftretende Kräfte den insbesondere als Pendel oder Schwungrad ausgeführten Energiewandler antreiben, was dazu verwendet werden kann, elektrische Energie zu gewinnen. Prinzipiell kann dabei jede geeignete Form des so genannten "energy harvesting" für den Energiewandler genutzt werden, um die erforderliche elektrische Energie zumindest teilweise zu gewinnen.

Vorzugsweise ist dabei zumindest einer der zuvor erläuterten Sensoren energieautark bzw. als Energiewandler ausgestaltet. Insbesondere ist der jeweilige Energiewandler mit der zuvor erläuterten Recheneinheit und gegebenenfalls mit weiteren der zuvor erläuterten Sensoren zur deren Versorgung mit elektrischer Energie verbunden.

Bei einer weiteren vorteilhaften Ausgestaltung der Erfindung weist die Transportvorrichtung zumindest einen Energiespeicher auf, mittels welchem der zumindest eine Sensor und/oder gegebenenfalls die Recheneinheit mit elektrischer Energie versorgbar sind.

Der jeweilige Energiespeicher kann beispielsweise als Batterie oder Kondensator oder dergleichen ausgeführt sein. Insbesondere kann der jeweilige Energiespeicher eine derartige Kapazität aufweisen, dass die Ermittlung der jeweiligen Masse zuverlässig während einer vorgebbaren Zeitdauer ausführbar ist. Vorzugsweise ist der jeweilige Energiespeicher mit der oben erläuterten Recheneinheit und gegebenenfalls mit einem oder mehreren der oben erläuterten Sensoren zu deren Versorgung mit elektrischer Energie verbunden.

Die Recheneinheit kann insbesondere derart ausgestaltet werden, dass der jeweiligen Energiespeicher, insbesondere dessen Temperatur, elektrische Spannung bzw. Stromstärke, überwachbar ist. Stellt die Recheneinheit beispielsweise fest, dass der jeweilige Energiespeicher einen kritischen Zustand erreicht, kann der Bediener über eine Benutzersteuerung des weiter unten erläuterten Transportsystems benachrichtigt werden. Genauso ist vorstellbar, dass die Recheneinheit ein verbundenes Condition-Monitoring-System alarmiert oder in einem Instandhaltungs-Management-System einen Instandhaltungs-Auftrag erzeugt. Insbesondere ist das Condition-Monitoring-System bzw. das Instandhaltungs-Management-System dabei als Teil des weiter unten erläuterten Transportsystems ausgestaltet.

Bei einer weiteren vorteilhaften Ausgestaltung der Erfindung weist die Transportvorrichtung zumindest eine erste Übermittlungseinheit auf, mittels welcher die ermittelte Masse übermittelbar ist.

Die ermittelte Masse bzw. der Zahlenwert der ermittelten Masse ist mittels der zumindest einen ersten Übermittlungseinheit insbesondere drahtlos an einen oder mehrere Empfänger außerhalb der Transportvorrichtung, insbesondere eine zweite Übermittlungseinheit des unten erläuterten Transportsystems, übermittelbar. Beispielsweise weist die zumindest eine erste Übermittlungseinheit eine Sendeelektronik und eine mit der Sendeelektronik verbundene Antenne auf, wobei die Sendeelektronik vorzugsweise mit der oben erläuterten Recheneinheit verbunden ist. Denkbar ist dabei, dass die Sendeelektronik derart ausgelegt ist, dass sowohl Daten gesendet als auch empfangen werden können.

Bei einer weiteren vorteilhaften Ausgestaltung der Erfindung ist die Transportvorrichtung als Schrottkorb für einen Elektrolichtbogenofen oder als Schrottschurre für Konverter (BOF/AOD) ausgeführt.

Schließlich wird die oben genannte Aufgabe durch ein Transportsystem der eingangs genannten Art dadurch gelöst, dass das Transportsystem zumindest eine oben erläuterte Transportvorrichtung, zumindest eine zweite Übermittlungseinheit und ein IT- oder Automatisierungssystem umfasst.

Beispielsweise kann die zweite Übermittlungseinheit als Empfangseinrichtung ausgestaltet sein, welche direkt mit einem drahtgebundenen Netzwerk verbunden ist. Genauso kann die Empfangseinrichtung über ein sogenanntes Mesh-Netzwerk mit weiteren Empfangseinrichtungen vernetzt sein. Im Mesh-Netzwerk existiert bei zumindest einer Empfangseinrichtung ein Übergang zum drahtgebundenen Netzwerk, welches vorzugsweise selbstständig eine Verbindung vermittelt. Das drahtlose Netzwerk kann dabei nach dem IEEE 802.11-Standard für WLAN oder IEEE 802.15.4-Standard für WirelessHART ausgeführt sein.

Über das drahtgebundene Netzwerk oder das drahtlose Netzwerk kann auch eine Bedienterminal angebunden sein. Die ermittelte Masse wird dorthin übertragen und vom Bediener werden Aktionen wie "Tarieren" oder "Beladen fertig" ausgelöst, wobei die Übertragung auf direktem Weg oder über ein verbundenes Automatisierungs-/IT-System, z.B. Level 2, erfolgen kann. Vorzugsweise kann der Bediener auch im System das aktuelle Transportgefäß bzw. die aktuelle Transportvorrichtung identifizieren, z.B. über eine auf dem jeweiligen Gefäß bzw. der jeweiligen Vorrichtung aufgemalten Nummer. Genauso vorstellbar ist, dass die Identifizierung des Gefäßes automatisch über ein Kamerasystem oder RFIDs erfolgt.

Beim Auslösen der Aktion "Beladen fertig" wird insbesondere dem verbundenen Automatisierungs-/IT-System die ermittelte Masse übermittelt. Zusätzlich können eindeutige Identifikationsmerkmale wie z.B. Charge, Kennzeichnung des Schrottkorbs, Datum, Uhrzeit, Benutzerkennung usw. übertragen werden. Die Ermittlung kann dabei sowohl von dem Bedienterminal aus erfolgen als auch von der Recheneinheit bzw. Steuerungselektronik aus. Ebenso ist vorstellbar, dass die Recheneinheit bzw. Steuerungselektronik kontinuierlich die ermittelte Masse und die von ihm vorliegenden Identifikationsmerkmale an das Automatisierungs-/IT-System überträgt und durch das Auslösen der "Beladen fertig"-Aktion in der Benutzersteuerung diese Werte im Automatisierungs-/IT-System als "akzeptiert" gekennzeichnet werden und dadurch weitere Verarbeitungsschritte ausgelöst werden.

Die oben erläuterte Transportvorrichtung und das oben erläuterte Transportsystem bieten neben den schon ausgeführten Vorteilen noch weitere vorteilhafte Aspekte. Zum Beispiel wird eine Massenbestimmung bzw. Gewichtsbestimmung mit einer Genauigkeit von +/- 0,5% ermöglicht, wodurch die Qualität des Produkts der hüttentechnischen Anlage, insbesondere die Stahlqualität verbessert werden kann, weil zuverlässigere Werte für das Prozessmodell zur Verfügung stehen. Weiterhin fallen Dank der exakteren und beispielsweise kontinuierlich durchgeführten Massenermittlung geringere Kosten für Rohmaterialien, insbesondere für sortierten Schrott, an. Beispielsweise kann die für die Stahlherstellung erforderliche Produktionszeit verringert werden, da weniger oder keine zusätzlichen Auffrisch-Vorgänge bzw. Nachblase-Vorgänge von Sauerstoff erforderlich sind. Ferner können Verzögerungen verringert oder vermieden werden, welche bisher für den Transport des Einsatzstoffes bzw. Schrottes zu einer stationären WägePlattform benötigt wurden, da die Menge des Einsatzstoffes nunmehr während des Transportes gewogen werden kann, so dass der eigentliche hüttentechnische Prozess sofort starten kann. Dadurch können sowohl Zeit während des hüttentechnischen Verfahrens als auch Kosten für stationäre Plattformwaage, beispielsweise für die Wartung der stationären Plattformwaage, eingespart werden. Kosten für das Handling, die Logistik und die Lagerung des Einsatzstoffes insbesondere auf dem Schrottplatz können verringert werden, unter anderem auch weil die Kommissionierung schneller erledigt werden kann. Ferner wird ermöglicht, die aktuelle Masse des im jeweiligen Transportgefäß befindlichen Einsatzstoffes auf einer Mensch-Maschine-Schnittstelle, beispielsweise auf einem Bildschirm in einem Ladekran, anzuzeigen und den aktuellen Wert beinahe in Echtzeit weiterzuleiten an ein bzw. speichern in einem Automatisierungssystem. Insbesondere kann vermieden werden, das jeweilige Transportgefäß zusätzlich zu beladen bzw. teilweise zu entladen, um eine gewünschte Menge von Einsatzstoff zu erhalten. Somit kann unter anderem die Handlingzeit des Einsatzstoffes verringert werden, wobei gleichzeitig zusätzlicher Lagerraum verfügbar wird, da weniger Ausrüstung insbesondere auf dem Schrottplatz benötigt wird. Die schnelle Ermittlung der jeweiligen Masse erlaubt weiterhin einen unmittelbaren Start der Berechnung bzw. Optimierung des durchzuführenden hüttentechnischen Prozesses, beispielsweise EAF-Verfahrens. Insbesondere wird eine größere Transparenz durch die komplette hüttentechnische Anlage hindurch ermöglicht, indem erweiterte Möglichkeiten zur Erlangung und zur Übermittlung von zuverlässigen Messdaten zur Verfügung stehen. Dadurch, dass eine verbesserte Planung und eine bessere Steuerung des hüttentechnischen Prozesses und der Umgebungsbedingungen ermöglicht werden, lässt sich letzten Endes auch die Performance der gesamten hüttentechnischen Anlage steigern. Dabei ist die erläuterte Transportvorrichtung und das erläuterte Transportsystem vergleichsweise leicht zu installieren und zu implementieren, ohne dabei die parallel laufende Produktion zu stören. Insbesondere entstehen vergleichsweise geringe Investitionskosten, so dass eine kurze Amortisierungszeit erreicht werden kann. Weiterhin ist der Aufwand für die Instandhaltung bzw. Wartung der Transportvorrichtung bzw. des Transportsystems vergleichsweise gering, da Elektronik mit lediglich kleiner Leistung eingesetzt werden kann. Insgesamt kann somit eine verbesserte Prozesssteuerung erzielt werden, wodurch eine höhere Produktionsleistung erreicht werden kann. Zusätzlich wird ermöglicht, den Input, insbesondere bezüglich der jeweiligen Charge, sowie die Kosten für das Rohmaterial exakt zu erfassen und nachzuverfolgen, wobei auch direkt ein Condition Monitoring insbesondere der erläuterten Transportvorrichtung ohne großen Aufwand umgesetzt werden kann.

Im Folgenden wird die Erfindung anhand der in den Figuren dargestellten Ausführungsbeispiele näher beschrieben und erläutert. Es zeigen:
- FIG 1: ein erstes Ausführungsbeispiel der erfindungsgemäßen Transportvorrichtung, und
- FIG 2: ein zweites Ausführungsbeispiel der erfindungsgemäßen Transportvorrichtung sowie ein Ausführungsbeispiel des erfindungsgemäßen Transportsystems.

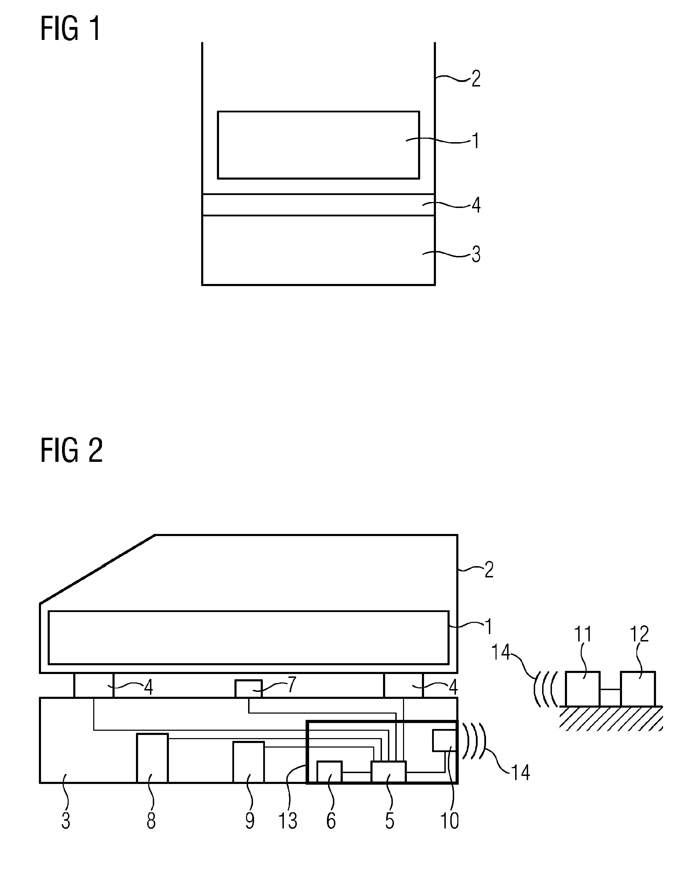

Figur 1 zeigt ein erstes Ausführungsbeispiel der erfindungsgemäßen Transportvorrichtung.

Die Transportvorrichtung ist für den Transport von Einsatzstoff 1, beispielsweise Schrott, ausgelegt und weist ein Transportgefäß 2, welches zumindest teilweise mit dem Einsatzstoff 1 befüllbar ist, eine Tragevorrichtung 3 und einen ersten Sensor 4 auf. Dabei ist der erste Sensor 4 zwischen dem Transportgefäß 2 und der Tragevorrichtung 3 angeordnet. Mittels des ersten Sensors 4 ist eine Masse des Transportgefäßes 2 und/oder eine Masse des im Transportgefäß 2 befindlichen Einsatzstoffes 1 ermittelbar.

Figur 2 zeigt ein zweites Ausführungsbeispiel der erfindungsgemäßen Transportvorrichtung sowie ein Ausführungsbeispiel des erfindungsgemäßen Transportsystems. Die Transportvorrichtung weist ein Transportgefäß 2, welches zumindest teilweise mit einem zu transportierenden Einsatzstoff 1 befüllbar ist, eine Tragevorrichtung 3 sowie zwei erste Sensoren 4 auf. Dabei ist der jeweilige erste Sensor 4 zwischen dem Transportgefäß 2 und der Tragevorrichtung 3 angeordnet, wobei das Transportgefäß 2 auf den beiden ersten Sensoren 4 aufliegt und der jeweilige erste Sensor 4 auf der Tragevorrichtung 2 aufliegt. Mittels der beiden ersten Sensoren 4 ist eine Masse des Transportgefäßes 2 und/oder eine Masse des im Transportgefäß 2 befindlichen Einsatzstoffes 1 ermittelbar.

Zur Ermittlung der jeweiligen Masse weist die Transportvorrichtung weiterhin eine Recheneinheit 5 auf, welche mit den beiden ersten Sensoren 4 zur Übermittlung der von den beiden ersten Sensoren 4 erfassten Daten verbunden ist. Zusätzlich weist die Transportvorrichtung einen zweiten Sensor 6 auf, mittels welchem eine Neigung und/oder eine Beschleunigung der Transportvorrichtung ermittelbar sind. Die ermittelte Neigung und/oder Beschleunigung kann von der Recheneinheit 5 bei der Ermittlung der jeweiligen Masse berücksichtigt werden. Weiterhin weist die Transportvorrichtung einen dritten Sensor 7 auf, mittels welchem eine Temperatur ermittelbar ist, wobei die ermittelte Temperatur ebenfalls von der Recheneinheit 5 bei der Ermittlung der jeweiligen Masse berücksichtigt werden kann. Zur drahtlosen Übermittlung der ermittelten Masse anhand von Funkwellen 14 ist die Recheneinheit 5 mit einer von der Transportvorrichtung umfassten ersten Übermittlungseinheit 10 verbunden. Im Rahmen des Ausführungsbeispiels sind dabei die Recheneinheit 5, der zweite Sensor 6 und die erste Übermittlungseinheit 10 von einem Elektronikgehäuse 13 zumindest teilweise eingefasst.

Für den Energiehaushalt der Transportvorrichtung weist die Transportvorrichtung einen mit der Recheneinheit 5 verbundenen Energiewandler 8 auf, mittels welchem elektrische Energie erzeugbar ist. Vorzugsweise setzt der Energiewandler 8 Techniken des so genannten "Energy Harvesting" ein, die weiter oben erläutert werden. Weiterhin weist die Transportvorrichtung einen mit der Recheneinheit 5 verbundenen Energiespeicher 9 auf, mittels welchem die Recheneinheit 5 mit elektrischer Energie versorgbar ist. Über die Recheneinheit 5 können dabei auch die verschiedenen Sensoren 4, 6, 7 sowie die erste Übermittlungseinheit 10 mit elektrischer Energie versorgt werden. Zusätzlich oder alternativ ist der Energiewandler 8 mit dem Energiespeicher 9 verbunden. Weiterhin kann vorgesehen sein, dass die verschiedenen Sensoren 4, 6, 7 energieautark betreibbar sind, wobei wiederum Techniken des "Energy Harvesting" zum Einsatz kommen können.

Das Transportsystem umfasst neben der erläuterten Transportvorrichtung zusätzlich eine zweite Übermittlungseinheit 11, mittels welcher eine drahtlose Kommunikation über die erste Übermittlungseinheit 10 mit der Recheneinheit 5 der jeweiligen Transportvorrichtung ermöglicht wird. Ferner weist das Transportsystem ein IT- oder Automatisierungssystem 12 auf, welches mit der zweiten Übermittlungseinheit 11 verbunden ist. Beispielsweise ist das IT- oder Automatisierungssystem 12 als Condition-Monitoring-System bzw. Instandhaltungs-Management-System ausgestaltet bzw. mit einem solchen System verbunden. Dabei ist das IT- oder Automatisierungssystem 12 vorzugsweise mit einer Prozesssteuerung der hüttentechnischen Anlage verbunden.

Zusammenfassend betrifft die Erfindung eine Transportvorrichtung und ein Transportsystem mit einer derartigen Transportvorrichtung für den Transport von Einsatzstoff einer hüttentechnischen Anlage, wobei die Transportvorrichtung ein Transportgefäß, welches zumindest teilweise mit dem Einsatzstoff befüllbar ist, und eine Tragevorrichtung umfasst. Um die erreichbare Produktqualität der hüttentechnischen Anlage zu erhöhen, wird eine Transportvorrichtung der eingangs genannten Art vorgeschlagen, wobei die Transportvorrichtung zumindest einen ersten Sensor umfasst, wobei der zumindest eine erste Sensor zwischen dem Transportgefäß und der Tragevorrichtung angeordnet ist, wobei mittels des zumindest einen erste Sensors eine Masse des Transportgefäßes und/oder eine Masse des im Transportgefäß befindlichen Einsatzstoffes ermittelbar ist. Schließlich wird vorgeschlagen, dass das Transportsystem zumindest eine oben erläuterte Transportvorrichtung, zumindest eine zweite Übermittlungseinheit und ein IT- oder Automatisierungssystem umfasst.

## Patentansprüche

1. Transportvorrichtung für den Transport von Einsatzstoff (1) einer hüttentechnischen Anlage, wobei die Transportvorrichtung
- ein Transportgefäß (2), welches zumindest teilweise mit dem Einsatzstoff (1) befüllbar ist, und
- eine Tragevorrichtung (3) umfasst,
**gekennzeichnet durch**
zumindest einen ersten Sensor (4),
wobei der zumindest eine erste Sensor (4) zwischen dem Transportgefäß (2) und der Tragevorrichtung (3) angeordnet ist, wobei mittels des zumindest einen erste Sensors (4) eine Masse des Transportgefäßes (2) und/oder eine Masse des im Transportgefäß (2) befindlichen Einsatzstoffes (1) ermittelbar ist.

2. Transportvorrichtung nach Anspruch 1,
wobei das Transportgefäß (2) auf dem zumindest einen ersten Sensor (4) aufliegt und der zumindest eine erste Sensor (4) auf der Tragevorrichtung (2) aufliegt.

3. Transportvorrichtung nach einem der vorhergehenden Ansprüche,
wobei die Transportvorrichtung eine Recheneinheit (5) aufweist,
wobei vom zumindest einen ersten Sensor (4) erfasste Daten an die Recheneinheit (5) übermittelbar sind,
wobei die Recheneinheit (5) zur Ermittlung der Masse ausgelegt ist.

4. Transportvorrichtung nach einem der vorhergehenden Ansprüche,
wobei die Transportvorrichtung zumindest einen zweiten Sensor (6) aufweist,
wobei mittels des zumindest einen zweiten Sensors (6) eine Neigung und/oder eine Beschleunigung der Transportvorrichtung ermittelbar ist.

5. Transportvorrichtung nach einem der vorhergehenden Ansprüche,
wobei die Transportvorrichtung zumindest einen dritten Sensor (7) aufweist,
wobei mittels des zumindest einen dritten Sensors (7) eine Temperatur ermittelbar ist.

6. Transportvorrichtung nach einem der vorhergehenden Ansprüche,
wobei die Transportvorrichtung zumindest einen Energiewandler (8) aufweist, mittels welchem jeweils elektrische Energie erzeugbar ist.

7. Transportvorrichtung nach einem der vorhergehenden Ansprüche,
wobei die Transportvorrichtung zumindest einen Energiespeicher (9) aufweist, mittels welchem der zumindest eine Sensor (4, 6, 7) und/oder gegebenenfalls die Recheneinheit (5) mit elektrischer Energie versorgbar sind.

8. Transportvorrichtung nach einem der vorhergehenden Ansprüche,
wobei die Transportvorrichtung zumindest eine erste Übermittlungseinheit (10) aufweist, mittels welcher die ermittelte Masse übermittelbar ist.

9. Transportvorrichtung nach einem der vorhergehenden Ansprüche, wobei die Transportvorrichtung als Schrottkorb für einen Elektrolichtbogenofen oder als Schrottschurre für Konverter (BOF/AOD) ausgeführt ist.

10. Transportsystem für den Transport von Einsatzstoff (1) einer hüttentechnischen Anlage, wobei das Transportsystem
- zumindest eine Transportvorrichtung nach einem der vorhergehenden Ansprüche,
- zumindest eine zweite Übermittlungseinheit (11) und
- ein IT- oder Automatisierungssystem (12) umfasst.
